(19) **Europäisches Patentamt / European Patent Office / Office européen des brevets**

(11) **EP 4 734 404 A1**

(12) **EUROPEAN PATENT APPLICATION**
published in accordance with Art. 153(4) EPC

(43) Date of publication:
29.04.2026 Bulletin 2026/18

(21) Application number: 24749299.4

(22) Date of filing: 12.06.2024

(51) International Patent Classification (IPC):
*H04B 10/63* (2013.01)  *H04B 10/64* (2013.01)
*H04B 10/70* (2013.01)

(52) Cooperative Patent Classification (CPC):
H04B 10/70; H04B 10/63; H04B 10/64

(86) International application number:
PCT/ES2024/070368

(87) International publication number:
WO 2024/261360 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.06.2023 ES 202330512

(71) Applicant: CONSEJO SUPERIOR DE
INVESTIGACIONES
CIENTIFICAS (CSIC)
28006 Madrid (ES)

(72) Inventors:
• RUIZ CHAMORRO, Andrés
 28006 Madrid Madrid (ES)
• FERNÁNDEZ MÁRMOL, Verónica
 28006 Madrid Madrid (ES)
• CANO REOL, Daniel
 28006 Madrid Madrid (ES)

(74) Representative: Pons IP
Glorieta Rubén Darío 4
28010 Madrid (ES)

(54) **DEVICE AND PROCEDURE FOR PILOT-TONE-ASSISTED DEMODULATION IN COHERENT OPTICAL COMMUNICATION SYSTEMS**

(57) Pilot tone-assisted demodulation procedure for coherent optical communication systems, specifically continuous-variable quantum key distribution (CV-QKD) systems, enabling compensation of random phase fluctuations in the lasers they use after acquiring the signal, solving the frequency-locking problem in a simple, efficient, and cost-effective manner.

Fig. 2

EP 4 734 404 A1

**Description**

**OBJECT OF THE INVENTION**

The present invention belongs to the field of pilot tone-assisted demodulation for coherent optical communication systems, specifically signal demodulation and frequency-locking techniques assisted by the transmission of a pilot tone alongside the data signal, which is used as a reference for the phase of the transmitter laser.
In particular, the invention relates to a device and method for assisted demodulation in continuous-variable quantum key distribution (CV-QKD) systems, a cryptographic technique based on the principles of quantum mechanics to secure communication channels. It allows compensating for random phase fluctuations in the lasers they use after acquiring the signal, solving the frequency-locking problem in a simple, efficient, and cost-effective manner.

**BACKGROUND OF THE INVENTION**

The introduction of using a pilot tone, along with other techniques such as temporal synchronization or low-complexity implementations, in the field of quantum key distribution is a relatively recent development.
Generally, this technique is employed for implementing a system known as PLL (phase-locked loop) to frequency-stabilize two laser sources before acquiring the received signal, a method that has been used in classical communications before the emergence of Quantum Key Distribution (QKD).
There are also documents discussing methods to correct phase drifts after signal acquisition, a category to which the present invention would belong, although none are similar to it. Some proposals include phase compensation through statistical analysis or signal demodulation using phase information extracted from the emitter's frequency measurement.
Therefore, it is known that the current state of the art includes methods for correcting phase drift in two lasers, both those performing correction before data acquisition and those doing so afterward. However, no examples of documents describing a procedure for CV-QKD systems that compensate for random phase fluctuations in the lasers they use after signal acquisition have been found, solving the frequency-locking problem similarly to what is presented here, nor achieving a similar degree of flexibility and simplicity.

**DESCRIPTION OF THE INVENTION**

The object of the present invention is a device and procedure for pilot tone-assisted demodulation in coherent optical communication systems, particularly for CV-QKD (Continuous Variable Quantum Key Distribution) systems. This device and procedure are capable of compensating for random phase fluctuations in the lasers these systems use after signal acquisition, solving the frequency-locking problem in a simple, efficient, and cost-effective manner.
To implement this procedure, only signal mixers and filters are used, reducing the complexity and cost of the device compared to the PLL loops typically employed to stabilize laser frequencies. The versatility of this technique lies in its ability to be implemented digitally using software-defined radio FPGAs or analogically using hardware with electronic circuits.
Regarding the applications of the present invention, it is applicable to any coherent optical communication system based on the transmission of a pilot tone as a phase stabilization method, typically CV-QKD systems.
The procedure comprises the following steps:

1. Measurement of the signal at the receiver using a coherent optical detector, which can be either heterodyne or homodyne, where the output of the coherent detector is an analog electronic signal composed of a data band and a pilot tone.

2. Signal division into multiple paths and processing. Both the electronic signal at the output in the case of a homodyne detector, $V(t)$, and the two electronic signals at the output in the case of a heterodyne detector, $V_I'(t)$ and $V_Q'(t)$, have a similar frequency spectrum. These signals can be mathematically represented as follows:

$$V_I{}'(t) = V_1 \cos\left(2\pi\Delta_f t + \Delta_\phi\right) V_I(t) + V_2 \cos\left(2\pi\left(\Delta_f + f_p\right)t + \Delta_\phi\right),$$

$$V_Q{}'(t) = V_1 \sin\left(2\pi\Delta_f t + \Delta_\phi\right) V_Q(t) + V_2 \sin\left(2\pi\left(\Delta_f + f_p\right)t + \Delta_\phi\right),$$

$$V(t) = V_1\big[\cos(2\pi\Delta_f t + \Delta_\phi)V_I(t) + \sin(2\pi\Delta_f t + \Delta_\phi)V_Q(t)\big]$$
$$+ V_2\cos\big(2\pi(\Delta_f + f_p)t + \Delta_\phi\big)$$

where $V_1$ and $V_2$ are the amplitudes of the data band and the pilot tone respectively, $\Delta_f$ is the frequency difference of both lasers, $\Delta_\phi$ is the phase difference of both lasers, $V_I(t)$ is the modulation signal sent by the transmitter in the $I$ quadrature, and $V_Q(t)$ is the signal sent in the Q quadrature.

From now on, the procedure for a heterodyne detector is described, as the procedure for the homodyne detector it's the same in duplicate. Therefore, the substeps of signal processing are as follows:

a. The signals $V_I'(t)$ and $V_Q'(t)$ are mixed in a first mixer with another electronic signal at the same frequency as the pilot tone, $f_p$. The spectrum at the output of any mixer is composed of the lower sideband and the upper sideband of this product, with the local oscillator signal serving as the carrier signal.

b. From the two resulting bands at the output of the mixer in the previous stage, only the lower sideband is filtered using a band-pass filter, specifically the pilot tone shifted to the lower sideband, which will have a frequency $\Delta_f + f_p - f_p = \Delta_f$, in other words, a frequency identical to the frequency difference between the two lasers, including all random drifts. This signal can be mathematically represented as the result of multiplying $V_I'(t)$ or $V_Q'(t)$ by a signal represented by $P(t) = \cos(2\pi f_p t)$. In any case, the process is the same, so only the first one is considered. The result of this multiplication is:

$$V_I'(t)P(t) = \frac{V_1}{2}\big[\cos(2\pi\Delta_f t + 2\pi f_p t + \Delta_\phi)$$
$$+ \cos(2\pi\Delta_f t - 2\pi f_p t + \Delta_\phi)\big]V_I(t)$$
$$+ \frac{V_2}{2}\big[\cos(2\pi\Delta_f t + 4\pi f_p t + \Delta_\phi) + \cos(2\pi\Delta_f t + \Delta_\phi)\big]$$

After the band-pass filter, the first three terms cancel out, leaving only the necessary signal to demodulate the received signal:

$$D(\text{t}) = \text{BPF}[V_I'(t)P(t)] = \frac{V_2}{2}\cos(2\pi\Delta_f t + \Delta_\phi)$$

c. Next, the original signal $V_I'(t)$ is mixed again in a third mixer (or a fourth mixer in the case of the phased path) with the newly obtained demodulating signal. This signal can be analytically calculated by multiplying the received signal, $V_I'(t)$, with the signal at the output of the band-pass filter, $D(t)$, and the result is:

$$V_I'(t)D(t) = \frac{V_1 V_2}{4}\big[\cos(4\pi\Delta_f t + 2\Delta_\phi) + 1\big]V_I(t)$$
$$+ \frac{V_2^2}{2}\big[\cos(4\pi\Delta_f t + 2\pi f_p t + 2\Delta_\phi) + \cos(2\pi f_p t)\big]$$

d. This signal is filtered with a low-pass filter to extract only the data band containing the transmitted signal. After this low-pass filter, only the second term remains, and therefore, the result is proportional to the signal $V_I(t)$ sent by the transmitter:

$$\text{LPF}[V_I'(t)D(t)] = \frac{V_1 V_2}{4}V_I(t)$$

## DESCRIPTION OF THE DRAWINGS

To complement the description being provided and to aid in a better understanding of the characteristics of the invention, according to a preferred example of its practical embodiment, a set of drawings is provided as an integral part of this description. These drawings, illustrative and non-limiting, represent the following:

Figure 1.- Shows the diagram of the device of the invention for a homodyne coherent detector.

Figure 2.- Shows the operational diagram of the invention for a heterodyne coherent detector.

**PREFERRED EMBODIMENT OF THE INVENTION**

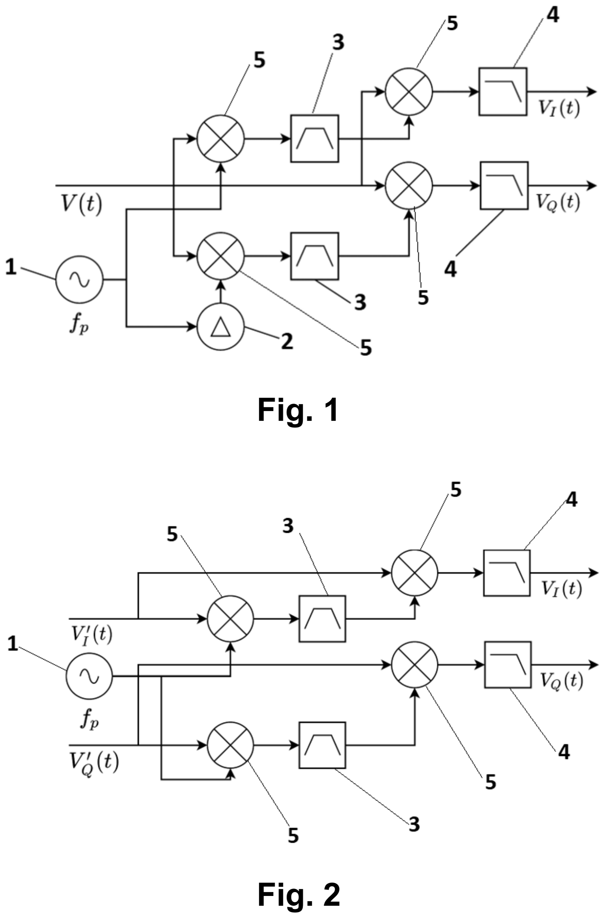

The preferred embodiments of the device and pilot tone-assisted demodulation procedure in communication systems are described below, with the assistance of Figures 1 and 2, for both homodyne and heterodyne coherent detectors.

Firstly, Figure 1 illustrates the diagram of the device for a homodyne coherent detector. In this case, there is only one input, $V(t)$, as it is a homodyne detector. In the procedure of the invention for this embodiment, a signal (1) of frequency $f_p$, equal to the frequency of the pilot tone, is generated. This signal is fed to both the first and second mixers (5) to be applied to the parts corresponding to the $I$ and $Q$ quadratures, respectively, passing through a 90° phase delay network (2) prior to the input of the second mixer.

At the other input of both mixers (5), the input signal $V(t)$ is fed. The respective outputs of these mixers (5) pass through band-pass filters (3) to obtain the necessary demodulating signals.

After exiting the filters (3), the resulting signals are fed to a third and a fourth mixer (5), respectively, while the other input of both mixers (5) is again fed with the original input signal $V(t)$.

Both output signals of these mixers (5) pass through respective low-pass filters (4) to obtain the desired $V_I(t)$ and $V_Q(t)$ signals.

Secondly, in Figure 2, an embodiment of the device for a heterodyne coherent detector is shown, which obtains two signals, $V_I'(t)$ and $V_Q'(t)$. Simultaneously, a signal (1) of frequency $f_p$, equal to the frequency of the pilot tone, is generated in a pilot tone signal generator (1). This signal is fed to a first and a second mixer (5) to be applied to the parts corresponding to the $I$ and $Q$ quadratures, respectively, without modifying their phase.

At the other input of both mixers (5), the input signals $V_I'(t)$ and $V_Q'(t)$ are fed. The respective outputs of these mixers (5) pass through band-pass filters (3) to obtain the necessary demodulating signals.

After exiting the band-pass filters (3), they are fed to a third and a fourth mixer (5), respectively, while the other input of both mixers (5) is again fed with the respective original input signals $V_I'(t)$ and $V_Q'(t)$.

Both output signals of these mixers (5) pass through respective low-pass filters (4) to obtain the desired $V_I(t)$ and $V_Q(t)$ signals.

**Claims**

1. A pilot tone-assisted demodulation device in communication systems with heterodyne coherent detector, **characterized by** comprising:

   - a heterodyne coherent optical detector, obtaining a pilot tone, a first signal $V_I'(t)$ and a second signal $V_Q'(t)$,
   - a pilot tone generator (1), generating a signal of frequency $f_p$ equal to the pilot tone frequency,
   - a first mixer (5) connected to the pilot tone generator (1) and to the first signal $V_I'(t)$,
   - a second mixer (5) connected to the pilot tone generator (1) and to the second signal $V_Q'(t)$,
   - a first and a second band-pass filter (3), connected to the first and second mixers (5), to obtain demodulating signals,
   - a third mixer (5) connected to the first band-pass filter (3) and to the first signal $V_I'(t)$,
   - a fourth mixer (5) connected to the second band-pass filter (3) and to the second signal $V_Q'(t)$, and
   - a first and a second low-pass filter (4) connected to the third and fourth mixer (5), respectively.

2. A pilot tone-assisted demodulation device in communication systems with homodyne coherent detector, **characterized by** comprising:

   - a homodyne coherent optical detector, obtaining a pilot tone and a signal $V(t)$,
   - a pilot tone generator (1), generating a signal of frequency $f_p$ equal to the pilot tone frequency,
   - a first mixer (5) connected to the pilot tone generator (1) and to the signal $V(t)$,
   - a phase delay network (2) connected to the pilot tone generator (1),
   - a second mixer (5) connected to the phase delay network (2) and to the signal $V(t)$,
   - a first and a second band-pass filter (3), connected to the first and second mixers (5), to obtain demodulating signals,
- a third mixer (5) connected to the first band-pass filter (3) and to the signal $V(t)$,
- a fourth mixer (5) connected to the second band-pass filter (3) and to the signal $V(t)$, and
- a first and a second low-pass filter (4) connected to the third and fourth mixer (5), respectively.

3.  A method for pilot tone-assisted demodulation in coherent optical communication systems, **characterized by** comprising the steps of:

    - capturing a signal to be demodulated with a coherent optical detector, obtaining a signal $V(t)$ composed of a pilot tone and a data band,
    - mixing the signal $V(t)$ with an electronic signal at the same frequency as the pilot tone, $f_p$, resulting in a signal with a spectrum comprising a lower sideband and an upper sideband,
    - obtaining a demodulating signal by filtering the electronic signal, $f_p$, shifted to the lower sideband,
    - mixing the signal $V(t)$ with the demodulating signal, resulting in a demodulated signal, and
    - filtering the demodulated signal to obtain the signal of interest defined by the data band.

4.  The method of claim 3, wherein the coherent optical detector is a homodyne detector, the method further comprising the additional step of:

    - phase-shifting by 90° the electronic signal at the same frequency as the pilot tone, $f_p$, before being mixed with the signal $V(t)$.

5.  The method of claim 3, wherein the coherent optical detector is heterodyne, the method further comprising the additional steps of:

    - applying the previous steps to a first output signal of the heterodyne sensor, and
    - applying the previous steps to a second output signal of the heterodyne sensor.

Fig. 1

Fig. 2

## INTERNATIONAL SEARCH REPORT

| International application No |
| --- |
| PCT/ES2024/070368 |

**A. CLASSIFICATION OF SUBJECT MATTER**

INV. H04B10/63    H04B10/64    H04B10/70
ADD.

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
| --- | --- | --- |
| A | US 2014/169793 A1 (HARLEY JAMES [CA] ET AL) 19 June 2014 (2014-06-19) paragraphs [0007], [0032], [0039] - [0044]; figures 5-9 | 1-5 |
| | - - - - - | |
| A | US 2009/129788 A1 (SEIMETZ MATTHIAS [DE]) 21 May 2009 (2009-05-21) paragraphs [0018], [0030], [0057]; figure 6 | 1-5 |
| | - - - - - | |
| | -/-- | |

| [x] Further documents are listed in the continuation of Box C. | [x] See patent family annex. |
| --- | --- |

\* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance;; the claimed invention cannot be considered novel or cannot be considered to involve an inventive step when the document is taken alone

"Y" document of particular relevance;; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| 5 November 2024 | 14/11/2024 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Koch, Bernhard |
| --- | --- |

Form PCT/ISA/210 (second sheet) (April 2005)

## INTERNATIONAL SEARCH REPORT

| International application No |
|---|
| PCT/ES2024/070368 |

**C(Continuation).    DOCUMENTS CONSIDERED TO BE RELEVANT**

| Category* | Citation of document, with indication, where appropriate, of the relevant passages | Relevant to claim No. |
|---|---|---|
| A | HENG WANG ET AL:  "High-speed Gaussian modulated continuous-variable quantum key distribution with a local local oscillator based on pilot-tone-assisted phase compensation", ARXIV.ORG, CORNELL UNIVERSITY LIBRARY, 201 OLIN LIBRARY CORNELL UNIVERSITY ITHACA, NY 14853, 18 August 2020 (2020-08-18), XP081743301, Section 5. Section 3, last paragraph; Fig 1,3,and 4 and theire captions.; abstract; figures 1,3,4<br>- - - - - | 1-5 |
| A | FABIAN LAUDENBACH ET AL:  "Pilot-assisted intradyne reception for high-speed continuous-variable quantum key distribution with true local oscillator", ARXIV.ORG, CORNELL UNIVERSITY LIBRARY, 201 OLIN LIBRARY CORNELL UNIVERSITY ITHACA, NY 14853, 29 December 2017 (2017-12-29), XP081305165, Fig. 4, 5 and related captions; abstract; figures 4,5<br>- - - - - | 1-5 |

Form PCT/ISA/210 (continuation of second sheet) (April 2005)

## INTERNATIONAL SEARCH REPORT

Information on patent family members

| International application No |
| --- |
| PCT/ES2024/070368 |

| Patent document cited in search report | | Publication date | Patent family member(s) | | Publication date |
| --- | --- | --- | --- | --- | --- |
| US 2014169793 | A1 | 19-06-2014 | US | 2014169793 A1 | 19-06-2014 |
|  |  |  | US | 2017019183 A1 | 19-01-2017 |
| US 2009129788 | A1 | 21-05-2009 | DE | 102006030915 A1 | 03-01-2008 |
|  |  |  | US | 2009129788 A1 | 21-05-2009 |
|  |  |  | WO | 2008000401 A1 | 03-01-2008 |

Form PCT/ISA/210 (patent family annex) (April 2005)

9